# EUROPEAN PATENT APPLICATION

(11) **EP 4 098 125 A1**
(43) Date of publication of application: **07.12.2022**
(21) Application number: 21305733.4
(22) Date of filing: 01.06.2021
(51) Int. Cl.: A23J 1/14

(54) **A SOYBEAN PROTEIN CONCENTRATE AND PROCESS FOR ITS PRODUCTION**

(71) Applicant: Avril, 75008 Paris (FR)
(72) Inventor: The designation of the inventor has not yet been filed
(74) Representative: LLR

(57) **Abstract**

A process for producing a protein concentrate from soybean seed and a protein concentrate or isolate which may be obtained from said process. The process comprises the successive steps of:
a) providing a press cake from soybean seeds, said soybean seed being at least partially dehulled before being pressed;
b) washing said press cake by mixing it with a first acidic aqueous solution to obtain an aqueous-washed soybean seed meal, wherein said first acidic solution comprises more than 90% w/w of water;
c) washing said aqueous-washed soybean seed meal by mixing it with a first alcohol solvent, to obtain a first alcohol-washed soybean seed meal, wherein said first alcohol solvent is a hydrous or a non-hydrous alcohol and has an alcohol concentration which is above 75 % w/w; and
d) separating said alcohol-washed soybean seed meal from said solvent to obtain said protein concentrate.

## Description

### Field of the invention

The invention relates to a process to purify and/or concentrate proteins and fibres from soybean seeds. The invention further relates to the product thus obtained, which is suitable for applications in food or feed.

### Prior art

Soybean seeds are an important source of proteins having a high nutritional value. In particular, proteins contained in soybean seeds are now widely used in the food or feed industry as, for example, food or food additives, food stabilisers, or as a major nutritious component. These proteins are usually obtained after the seeds (dehulled or not) are crushed and pressed to remove most of the oil and the residual press cake (or cake or expeller) is extracted, generally using hexane, to recover the remainder of the oil (see for example US2012/025301A1). The residual meal from the solvent extraction contains residual hexane and is commonly known as "white flake" or "collets". The solvent is recovered from the meal for re-use before the meal is disposed of by the Desolventizer-Toaster. In standard solvent recovery processes, the oilseed meal is often heated to a higher temperature of about 120°C to 140° C in a procedure termed "toasting". This hexane-treated meal is highly defatted (fat:1% dry matter w/w or less). To obtain a protein concentrate this hexane-extracted meal is usually treated with 1) an aqueous alcohol leach or 2) an acid leach (pH 4.5) or 3) a moist heat denaturation followed by water leach (cf. MA, C-Y (2016)). Hexane is obtained from petrochemical sources., It is now regarded as generally desirable to avoid using hexane in the production of foodstuff. Standard soy concentrates have usually a protein content of at least 66% (cf. MA (2016)) and a maximum of crude fibres of 4.5% and of fat of 1% w/w over dry matter (DM), (cf. BERK, Zeki, 1992, Chapters 5.2 & 5.3).

As there are increased demands for protein concentrates having particular profiles in terms of organoleptic characteristic (e.g. taste, flavour, colour), higher fibre content, acceptable amounts of fat and/or polyphenols and/or phytates and/or oligosaccharides of the raffinose family, increased or enhanced water holding capacity, digestibility, emulsifying capacity, solubility, including nitrogen solubility profile; there is a need for a soy protein concentrate having at least one, and preferably many, of these desirable characteristics as well as for a process suitable for preparing such a protein concentrate on an industrial scale and/or providing a high yield of protein at limited costs preferably without the use of hexane and/or non-polar solvent.

Providing a soy protein concentrate having a high protein content as well as a medium to high total fibre content is another aim of the invention. This combination is particularly desirable because fibres are usually under-represented in human nutrition. A high-fibre and high-protein diet is linked to reduced risks of metabolic syndrome and is associated with several health benefits. Thus, a soy concentrate combining high level of protein and fibres, and preferably very little sugar is of particular interest.

Given the plurality of objectives listed above, optimising a purification process of desirable soybean proteins to obtain both a cost effective method and a quality product has proven to be a most difficult and challenging task. These challenges are compounded when the purification process is carried out on a press cake containing a relatively high level of oil or fat such as 15 wt. % or less, generally from 3 to 10 wt. %, of oil or fat, as the presence of fatty compounds reduces the efficient removal of oligosaccharides, polyphenols and/or other anti-nutrients during the purification processes and is generally regarded as undesirable.

### Description of the invention

It is therefore an object of the invention to provide a method to obtain a protein concentrate from soybean seeds which can be used on soybean seeds meals which have not been contacted with hexane and/or a non-polar solvent. It is a further object of the invention to provide a protein concentrate from these seeds having at least one of the following characteristics:
- a high protein content;
- an elevated fibre content;
- a low fat content;
- an increased or enhanced water holding capacity, digestibility, emulsifying capacity, and/or nitrogen solubility profile;
- a lighter colour (white or whitish) of the protein concentrate powder and/or a better flavour than commercial concentrates;
- being obtainable using the process of the invention; and
- being suitable for applications in food or feed.

Alternatively, or additionally, it is also an object of the invention to provide a process to obtain a concentrate of soybean seed proteins which is more environmentally friendly by using green solvents, such as water and alcohol and/or avoiding the use and/or the amount of hexane or n-hexane and/or, more generally, other non-polar solvents.

Alternatively, or additionally, it is a further object of the invention to provide a process to obtain a concentrate of soybean seed proteins which may be obtained without dissolving the proteins which are to be concentrated while providing a concentrate which presents a high concentration in protein.

According to one aspect of the invention it is provided a process for producing a soybean seed protein concentrate, said process comprising the successive steps of:
a) providing a press cake from soybean seed such as seed from the *Glycine max* L.. species, said soybean seed being at least partially dehulled before being pressed;
b) washing said press cake by mixing it with a first acidic aqueous solution to obtain an aqueous-washed oilseed meal, wherein said first acidic solution may comprise more than 90% w/w of water;
c) washing said aqueous-washed soybean seed meal by mixing it with a first alcohol solvent, to obtain a first alcohol-washed soybean seed meal, wherein said first alcohol solvent is a hydrous or a non-hydrous alcohol and has an alcohol concentration which may be above 75 % w/w; and
d) separating said alcohol-washed soybean seed meal from said solvent to obtain said protein concentrate.

Such a process, or method, allows obtaining a high quality soybean protein concentrate on an industrial scale.

A distinction between protein "concentrates" and protein "isolates" is made due to the production method and the resulting protein content. According to standard STAN 175-1989 from the FAO, soy protein isolates have a very high protein content of at least 90 wt. % "as is" (N x 6.25) compared to plant protein concentrates which have a soy protein content ranging from 65 wt.% to less than 90 wt. % "as is" (N x 6.25). Usually, to prepare protein isolates, the proteins contained in a non-polar solvent (e.g., hexane) extracted meal are dissolved in water (not comprising large amount of alcohol) at an alkaline/basic pH and then isolated from the aqueous solution, for example by precipitation at an acidic pH.

The expression "as is" is use to indicate that the weight percentages are calculated over the total weight of the product (and not over a de-moisturised [dry] product). The expression DM is use to indicate that the weight percentages are calculated over the total weight of dry matter. When neither "as is" nor "DM" is use mentioned then the weight percentages are calculated "as is".

### SOYBEAN SEED/STARTING MATERIAL

In this specification the soybean is a plant from the genus *Glycine,* in particular from the species *Glycine max* L.. The term "soy" or "soybean", or the expression "soybean seed", used interchangeably in this specification encompasses not only *Glycine max* L. but also all the members of the genus. Although almost whole of the soy production is in fact from *Glycine max* L., other species of seeds from the genus, as well as new varieties of plant, or variants, obtained by crossbreeding or genetic modifications are also encompassed by the term "soy" or "soybean" which is used in its broadest possible sense as the process of the invention can be applied to the soybean seeds produced by member of the genus.

The press cake used is obtained from at least "partially" dehulled soybean. Processing steps of soybean dehulling are well known in the art (Laisney, 1984; Matthaus, 2012). The dehulling step includes removing the hull from the soybean seed. The dehulling step produces a "dehulled soybean" or soybean kernels. At the industrial scale, the dehulling is generally partial. By "partially dehulled soybean", it is meant that 10% w/w, preferably 50% w/w, more preferably 75% w/w, most preferably 90% w/w of the hull has been removed from the soybean . The soybean is preferably completely (*i.e.* fully), that is more than 95 wt. % dehulled.

Therefore, the use of fully dehulled soybean seeds (e.g. kernels) as starting material is specifically encompassed by the invention. According to a preferred embodiment of the invention, the soybean seeds used in the process of the invention are kernels. Kernels consist, or consist essentially of fully dehulled soybean seeds. By "consist essentially" it is meant that the seeds used are at least 95 %, preferably 98% and more advantageously 99% kernels in weight percent over the total dry matter weight (%/DM w/w).

Soybean kernels or dehulled seed can advantageously be cracked into smaller particles and then possibly flattened into thin flakes, especially if they are cooked before screw pressing. Processing steps of oilseed (in particular soybean) flaking are well known in the art (Laisney, 1984; Z Berk - 1992 (Chap. 3.1); Matthaus, 2012). In certain embodiments, the soybean seed can be pre-heated before flaking at a temperature generally ranging from 30°C to 50°C. The flaking step produces a "flaked soybean seed". The flaking step is achieved in a flaking mill, through flaking rolls.

### PRESSING

Processing steps of oilseed (in particular soybean) pressing are well known in the art (Laisney, 1984; Unger, 1990; Matthaus, 2012). The pressing step includes partially removing the oil from the soybean seed, *i.e*., removing at least 60% (w/w) of the oil from the soybean seed.

The soybean seed press cake to be used in the method according to the present invention is preferably obtained by cold-pressing, i.e. the seeds are preferably not cooked prior to its passing through the press. In the press, the seeds (e.g. kernels) are crushed and some of the seed oil is thus expelled. Even during the pressing step, it is preferred that the temperature of the soybean seed does not go beyond 85°C, preferably not beyond 80°C, more preferably not beyond 74°C. The pressing step is achieved (mechanically) in a press, preferably a screw press. The process is advantageously carried out at a temperature above room temperature such as equal to, or above, 22°C. A preferred screw press is a barrel-type screw press with vertically split hinged barrel, such as the type commercially available from CPM SKET GmbH (Germany) or MBU20 sold by the French Company OLEXA (Feuchy, FR). According to an advantageous embodiment of the invention, the moisture content of the soybean seed at the inlet of the press, or before the pressing, is ranging from 2% to 8%, preferably from 3% to 7%, e.g. 6%. Hence the process of the invention may advantageously include a step of moisturizing and/or drying the soybean seed prior to carrying out the pressing step, in order to achieve the advantageous moisture content. In another advantageous embodiment of the invention, the temperature of the soybean seed at the inlet of the press, or prior to the pressing step, is ranging from 10°C to 40°C, preferably from 10°C to 30°C, more preferably from 18°C to 25°C, most preferably 20°C to 22°C. The appropriate moisture content or temperature of the soybean seed can be obtained by heating the over-moist/cold soybean seed at a temperature of 50°C or less prior to pressing, preferably at a temperature ranging from 30°C to 40°C. This would be particularly suitable when, for example, the soybean seed is stored under particular cold (e.g. winter) or wet conditions.

Due to press friction during the pressing step, the temperature of the soybean seed is increasing. However, the temperature of the soybean seed during the pressing step shall be maintained as of 80°C or less and by order of increasing preference 75°C or less, 72°C or less, 69°C or less, most preferably 67°C or less. As it will be easily understood, it is also advantageous that the temperature does not drop too low. The temperature lower limit is generally considered to be about or above room temperature, e.g. 22°C. Advantageously, the temperature of the resulting soybean press cake at the press outlet is ranging from 50°C to 75°C, preferably 60°C to 70°C. The pressing step produces an "soybean press cake", also named "soybean expeller". The pressing step according to the present invention can be repeated at least twice (double-pressing or more). According to a preferred embodiment of the invention the soy press cake has an oil content ranging from 5% to 15% dry w/w, in particular from 6% to 10% dry w/w. This is substantially a higher fat content than the one of a hexane defatted meal. The oil content of the soybean press cake can depend on the temperature of the soybean seed during the pressing or the number of pressing steps. By way of example, the soybean press cake obtained by cold-pressing at a temperature of 74°C or less (e.g. 64°C to 72°C) can have an oil content ranging from 5% to 15% dry w/w, in particular from 5 % to 9% dry w/w, which is determined by the adapted Soxhlet extraction method. The press cake is advantageously submitted to a temperature which is not higher than 100° C and, in particular, is not toasted.

According to a particularly preferred aspect of the invention, the soybean, the pressed soybean (*i.e.,* soy press cake), and more generally the product obtained according to the process of the invention, is not treated with a non-polar solvent and in particular is not treated with hexane or n-hexane.

### ACIDIC AQUEOUS WASH

According to the invention the sunflower press cake is washed, at least once, by mixing it with a first acidic aqueous solution to obtain an aqueous-washed soybean meal. The acidic aqueous solution comprises obviously water, which can be pure water (aqua) or drinking water. The pH of the mixture is advantageously adjusted to range from 3.5 to 5.2, preferably 3.8 to 5.1, more preferably from 4.5 to 5.0 and most preferably from 4.7 to 4.9. This adjustment can be made by any means known to skilled person but preferably comprises the use of water which is acidified beforehand. For example, this acidification can be carried out by adding an acid such as the ones mentioned below. The use of phosphoric acid was found satisfactory. The acidified water can have a lower pH than the one which is sought to be achieved within the mixture. Using acidified water having a pH ranging from 1.5 to 3, in particular a pH of around 2, has demonstrated good results.

In order to adjust the pH of the mixture, once the (preferably acidified) water has been added to the press cake, a component acting as a pH regulator, such as an acid or a base, can be added. For example, this component can be a mineral or a salt such as an alkali, (e.g. NaOH, Ca(OH)2 and/or Na2CO3), or a weak acid, such as lactic acid, citric acid, propionic acid, ascorbic acid, phosphoric acid or sodium bisulphite, preferably phosphoric acid. Phosphoric acid at a suitable concentration (e.g. 75% (v/v), or 1 M) is preferred. The wash may comprise at least 90 wt.% water, preferably at least 95 wt. % and more preferably at least 98 wt.%. The acidic wash may comprise essentially water and acid(s).

It is further preferred that the acidic aqueous liquid used to wash the soybean press cake does not contain an alcohol.

The weight ratio of ((soybean press cake) : (water)) used can range from 1:15 to 1:4 w/w, preferably 1:10 to 1:6, e.g. about 1:8. The term water in this ratio encompasses the mass of water as well as the mass of acidified water, if the water is acidified prior to be added to the press cake.

According to a particular embodiment of the invention, the temperature set during the washing step is ranging from 45°C to 65°C, preferably from 50°C to 65°C and most preferably from 55°C to 60°C.

According to another advantageous embodiment of the invention the residence time of the soybean seed meal within the aqueous solution may range from 10 minutes to 90 minutes, preferably around 30 minutes to 60 minutes, most preferably from 40 minutes to 50 minutes, e.g. around 45 minutes.

As it is usual, the aqueous solution and the soybean meal can generally be admixed together by general stirring. When the acidic aqueous washing step is over, the solid can be separated from the liquid (spent aqueous solution) by usual liquid-solid separation such as decantation, filtration with a meshed material, membrane or cloth (e.g. 10µm meshed material). Decantation means, in particular a centrifugation step, is preferred. Such a step can be carried out with standard decanter which can develop centrifugal forces of 3000 to 5000 g, preferably around 4000 g.

The washing step can be carried in a tank, such as an agitated filter tank, a jacketed reactor, an extractor, such as an immersion extractor, or a percolation extractor (e.g., shallow bed percolation extractor). The solid material within the mixture is a soy press cake, that is, a de-oiled soybean meal. The term "de-oiled" is not meant to describe a product where no oil remains; it simply describes the fact that compared with the starting soybeans, the resulting product presents less oil (or fat). Once the acidic aqueous washing step has been carried out the resulting solid is an aqueous-washed soybean meal.

According to an embodiment of the invention it is considered that repeating the acidic washing step could be advantageous. In particular repeating this step more than once, preferably more than twice, in particular more than 4 times could improve the outcome.

According to a particularly preferred embodiment of the invention, the process of the invention comprises only one acidic washing step and not several, as it has surprisingly been found that satisfactory results can be achieved using a single wash. The economy of water connected with a process with limited amount aqueous wash is highly beneficial to the environment and to the cost effectiveness of the process.

### ALCOHOL WASH

According to the process of the invention the aqueous-washed soybean seed meal is then washed by mixing it with a first alcohol solvent, to obtain a first alcohol-washed soybean seed meal. The first alcohol solvent is a hydrous, a non-hydrous or an azeotrope mixture of alcohol and has preferably an alcohol concentration which may be above 75 % w/w. Preferably an azeotrope (alcohol with a few percent water is used).

The alcohol contained in the alcohol solvent is preferably chosen in the group of C1 to C20 aliphatic organic compounds, branched or not branched, that carry at least one hydroxyl functional group, and their mixture thereof. According to another preferred embodiment of the invention the alcohol solvent is a lower (C1 to C6) aliphatic alcohol, such as ethanol, isopropanol, methanol, or a mixture thereof, preferably ethanol. As amongst these, ethanol is the alcohol which appears the most suitable.

As it is well known and well understood in the art, alcohols are hydrophilic compounds and usually contain in their commercial form a small amount of water. Hence the alcohol to be used can contains a small amount of water, in general 96% (w/w), and in particular 96% (w/w) ethanol (also called "ethanol"), is the alcohol concentration most commonly used, but higher concentration, such as up to 99% (e.g. absolute alcohol) can also be used. This step can be repeated, hence there can be two, three, four etc.... alcohol washes.

Advantageously the step of washing with an alcohol solvent is repeated no more than once.

The alcohol solvent can comprise higher amounts of water and include what is generally known as aqueous alcohol, wherein the percentage of alcohol is about 70% (w/w), the remaining compound being water.
However better results are obtained with solvent containing a higher concentration of alcohol. It is recommended that the solvent has an alcohol concentration of alcohol over water ranging from 75% to 99 % (w/w), preferably from 80% to 99% (w/w), for example at least or around 96% (w/w). The alcoholic solvent can comprise or consist of the aqueous azeotrope of the selected alcohol, or mixtures thereof that is 96% w/w for ethanol, and 88% w/w for isopropanol, preferably +/-2% (w/w).

The use of an alcohol-based solvent comprising at least 94 % (w/w), preferably 96% (w/w) of alcohol, and preferably ethanol, the remaining compound being advantageously water (or aqua), is highly preferred.

Other compounds, in particular polar solvents, to the exclusion of water, can be used in association with the alcohol. However, according to a preferred embodiment, only alcohol(s) is used to minimise the costs and the environmental consequences of the process. It should be noted that the term "an alcohol" used in the present specification encompasses mixture of alcohols.

Preferably, the soybean aqueous-washed meal is mixed with the alcohol solvent according to a weight ratio (solids):(alcohol solvent) ranging from 1:2 to 1:8 w/w, preferably 1:3 to 1:4, e.g. about 1:3.5.

According to a particular embodiment of the invention, the temperature set during the alcohol washing step ranges from 45°C to 67°C, preferably from 55°C to 65°C, in particular around 58°C.

According to another advantageous embodiment of the invention, the residence time of the aqueous-washed soybean meal within the alcohol solvent may range from 5 minutes to 60 minutes, preferably around 7 minutes to 50 minutes, most preferably from 10 minutes to 40 minutes, e.g. around 10 to 30 minutes.

As it is usual the alcohol solvent and the aqueous-washed soybeans meal can generally be admixed together by general stirring. The aqueous-washed soybean meal used in this step may already contain a certain amount of water remaining from the previous process step. The minimum amount of alcohol within this wash may be of at least about 50% (w/w), preferably at least 70% (w/w) and advantageously at least, or around, 80% ± 2%.

A higher concentration of alcohol may be used, for example pure (99% (w/w)) or azeotropic alcohol (e.g. 96 % in the case of ethanol). In this case, the substrate can be subjected to a drying step before the wash in order to reduce the quantity of water, or other solvents, it contains.

When the washing step is over, the solid is separated from the liquid (spent first alcohol solution) by usual liquid-solid separation, as described above in reference with the acidic washing step.

According to an embodiment of the invention it was found that to repeat the washing step at least once is advantageous, especially if:
- enhancing its water holding capacity, oil holding capacity or emulsifying capacity (ml);
is a specific aim. In particular it was found that repeating the alcohol washing step once lead to a concentrate having such features.

Thus, according to a particularly preferred embodiment of the invention, the process of the invention may comprise only one or two alcohol washing step (s), as it has surprisingly been found that satisfactory results can be achieved using a single, or at most two, alcohol wash(es). The economy of alcohol connected with a process with a limited amount of alcohol solvent usage is highly beneficial to the environment and to the cost effectiveness of the process.

It should be noted, that only two washing steps, one being an acidic aqueous wash and the other an alcohol solvent wash, can be sufficient to satisfactorily eliminate a substantial amount of at least some antinutritional factors from the soybean seed protein concentrate whilst providing a concentrate having a high protein content.

When more than one alcohol washing step is carried out, it can be beneficial to use a recycled solvent (that is the spent first alcohol solvent which was used from a previous washing step) for all of the repeated washing steps. Alternatively, recycled solvent and fresh solvent can be both used each for a distinct wash/step. It may also be more economical to use a mixture of fresh and recycled alcohol for some or all of the steps.

The minimum amount of alcohol within a second alcohol wash may be at least about 65% (w/w), preferably at least 85% (w/w) and advantageously at least, or around, 94% ± 1% (w/w). A higher concentration of alcohol may be used, for example pure (99% (w/w)) or azeotropic alcohol (e.g. 96 % in the case of ethanol). In this case, the washed proteins can be subjected to a drying step before the wash in order to reduce the quantity of water, or other solvent, it contains.

According to an advantageous embodiment of the invention the pH during the alcohol washing step(s) can be adjusted to a set pH which is in function of its projected use. For example, this pH can be adjusted, if required, to a neutral range from 6 to 7.5 and is advantageously set to 6.5 ± 0.2.

In order to adjust the pH of an alcohol wash, a component acting as a pH regulator, such as an acid or a base, can be added. For example, this component can be a mineral or a salt such as an alkali, (e.g. NaOH), or a weak acid, such as the ones mentioned before.

As it is usual, when the alcohol washing step is over, the solid is separated from the liquid by usual liquid-solid separation as described above in reference to the acidic washing step. The solid thus obtained is a protein concentrate according to the invention.

### DESOLVENTIZING (DRYING)

According to a preferred embodiment of the invention, the protein concentrate is subjected to a desolventizing (drying) step which may be achieved under partial vacuum, using, for example, a vacuum paddle dryer; a drying stove or a laminar flow hood.in particular a Paddle vacuum Dryer, Double Cone Dryer or a Down Draft Desolventizer (DDD). A drying oven or a double cone vacuum dryer can also be used. Alternatively, it can be achieved in a tank or reactor wherein the process has taken place by applying a vacuum (e.g. 0.1 to 0.2 bar) and at a convenient temperature (e.g. below 70°C, preferably below 60°C). The use of a vacuum allows to minimise denaturation of the proteins. According to an advantageous embodiment of the invention the residence time of the concentrate of soybean protein is ranging from 100 minutes to 200 minutes, preferably 120 minutes. Advantageously the temperature is lower than 70°C, preferably lower than 60°C. For example, the temperature is ranging from 50 to 60°C, preferably for about 180 ± 10 mins.

Desolventizing (drying) steps can also be used within the process of the invention as intermediary steps to dry, i.e. remove the solvent or moisture, of the solids. For example it can advantageously be used between to subsequent washes. This permits to better remove one solvent, e.g. water, when another solvent, e.g. (aqueous) alcohol, is to be used. It also allows, as described above, to prevent, or minimise, the dilution of the next solvent. It also may improve the efficacy of the previous washing step by removing more undesirable components dissolved within the solvent.

Advantageously, the soybean seed protein concentrate is dried to reach a moisture content ranging from 5% to 10%. This step produces a "dry oilseed protein concentrate".

### SIEVING (SORTING)

The dry soybean seed protein concentrate can be subjected to at least one sieving (or sorting) step. Sieving technologies are well known in the art. For example, one can use a sieving or plansifter machine or a triboseparator. However, when the press cake is made from kernels (completely dehulled seeds) this step is usually not required and can be omitted.

### MILLING-MICRONISING

Additionally, or alternatively, the dry soy protein concentrate can be transformed into a powder, such as a micronized powder. This step can be carried out by using a milling technology such as air jet mill or impact mill for example. Advantageously, the soybean seed protein concentrate has a D50 (µm) average particle size comprised between 25µm and 100µm, preferably between 25µm and 50µm, more preferably between 30µm and 40µm.

Advantageously, the soy protein concentrate has a D99 (µm) average particle size comprised, between 400µm and 800µm, preferably between 450µm and 500µm, more preferably between 460µm and 480µm. The average size particle of the soy protein concentrate before and after milling can be measured using laser diffraction (Mastersizer 2000, Malvern, cell, dispersion unit Hydro 2000, dispersant: Alcool, refractive index: 1,52, Absorption: 0,1). This optional milling step allows obtaining a homogenous commercial product.

A micronized powder, or flour, is therefore another object of the invention. Preferably the powder, or flour, is a white powder. Such a white powder is obtainable according to the process of the invention, in particular when the press cake used is a press cake obtained from kernels, that is seeds which are dehulled.

### OTHER STEPS

According to one embodiment of the process of the invention, the alcohol used is ethanol, and preferably ethanol at 96% (w/w), in all of the alcohol-using processing steps.

According to one embodiment of the process of the invention, the soybean seed is not flaked prior to step a).

According to another embodiment of the process of the invention, it does not comprise a microfiltration or diafiltration step.

According to yet another embodiment of the process of the invention, it does not comprise the use of a cyclone concentrator or a cyclone concentration step.

The washing steps of the process of the invention advantageously include removing (leaching at least some undesirable molecules (UM) such as carbohydrates (monosaccharides, disaccharides and oligosaccharides) from the defatted soybean seed meal. Carbohydrates, or sugars, include monosaccharides (such as fructose, glucose, and galactose), disaccharide (sucrose), and alpha-galactosyl derivatives of glucose, among which most common are the trisaccharide raffinose, the tetrasaccharide stachyose, and the pentasaccharide verbascose.

According to a particularly preferred other embodiment of the invention the process does not dissolve the proteins to be concentrated in water at an alkaline/basic pH. These proteins to be concentrated may advantageously stay in a solid or undissolved state throughout the process of the invention. The concentration of the desirable proteins can such be achieved mainly through dissolving and washing away unwanted components (e.g. fat ,carbohydrate, albumins, etc..) and drying, or desolventizing, the proteins remaining in the meal. By contrast, the usual method to prepare protein isolates comprises dissolving the desired proteins (i.e. globulins) in water at an alkaline/basic pH and then isolated from the aqueous solution, for example by precipitation at an acid pH.

### SOY PROTEIN CONCENTRATE

As mentioned before a particular object of the invention is a soybean seed protein concentrate, usually referred to as a soy protein concentrate, which is advantageously obtained or obtainable by a process of the present invention as described therein.

According to another object of the invention the soy protein concentrate of the invention, which may be advantageously obtained or obtainable by the process of the present invention, comprises:
- a protein content of at least 70% dry matter w/w, preferably at least 75% dry matter (DM) w/w, preferably at least 78% dry matter w/w and especially at least 80%, and which may have less than 85% dry matter w/w (N x 6.25); and
- a content of total fibres higher than or equal to 8% DM w/w, preferably higher than or equal to 10% DM w/w, and more preferably higher than or equal to 14 ± 2 % dry matter w/w.

It is preferred that the concentrate of the invention, advantageously obtained or obtainable by the process of the present invention, comprises a fat content of less than 14% dry matter (DM) w/w, preferably less than 10% DM w/w, in particular less than 3 %, more particularly less than 2 % dry matter w/w. Further, the fat, or oil, content is preferably more than 1% DM (w/w) and may advantageously range from 1.5% to 10% DM w/w.

Thus, a preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);and
- a fat content of less than 14% dry matter w/w, preferably less than 10% DM w/w, in particular less than 3 %, more particularly less than 2% dry matter w/w.

Another preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a fat content of less than 14% dry matter w/w, preferably less than 10% DM w/w, in particular less than 3 %, more particularly less than 2% dry matter w/w; and
- a content of total fibres higher than or equal to 8% DM w/w, preferably higher than or equal to 10% DM w/w, and more preferably higher than or equal to 14 ± 2 % dry matter w/w.

It is also preferred that the soy protein concentrate, advantageously obtained or obtainable by the process of the present invention, has a water holding capacity (WHC) per gram of concentrate, of at least 3 g/g or 4 g/g. Preferably, the WHC ranges from 3.4 g/g to 7.0 g/g, in particular from 4 g/g to 5 g/g of concentrate; the method for measuring the WHC being described in the Examples below.

A preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a content of total fibres higher than or equal to 8% DM w/w, preferably higher than or equal to 10% DM w/w, and more preferably higher than or equal to 14 ± 2 % dry matter w/w;
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1.5% to 10% DM w/w; and
- a water holding capacity (WHC) of at least 3 or 4 g/g, preferably ranging from 3.4 g/g to 7.0 g/g, in particular from 4 g/g to 5 g/g of concentrate.

It is further preferred that the protein concentrate, advantageously obtained or obtainable by the process of the present invention, has a minimum gelling concentration of 12 % (w/w) protein content or less, preferably of 10% or less and even more preferably of 7% or less protein content. A preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1.5% to 10% DM w/w;
- a content of total fibres higher than or equal to 8% DM w/w, preferably higher than or equal to 10% DM w/w, and more preferably higher than or equal to 14 ± 2 % dry matter w/w.
- a water holding capacity (WHC) of at least 3 or 4 g/g, preferably ranging from 3.4 g/g to 7.0 g/g, in particular from 4 g/g to 5 g/g of concentrate; and
- a minimum gelling concentration of 12 % (w/w) protein content or less, preferably of 10% or less and even more preferably of 7% or less protein content.

It is further preferred that the protein concentrate, advantageously obtained or obtainable by the process of the present invention, comprises a total sugar content of 1.5 % (w/w) / DM or less, preferably of 1.0 % (w/w) / DM, and even preferably of 0.4 % (w/w) / DM, or less (e.g. less than 0.3% (w/w). It is also particularly advantageous that the concentrate comprises less than 0.5 % (w/w) / DM of alpha-galactosyl derivatives of glucose (such as raffinose, stachyose, and verbascose), and particularly less than 0.3 % (w/w) / DM. A preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1.5% to 10% DM w/w;
- a content of total fibres higher than or equal to 8% DM w/w, preferably higher than or equal to 10% DM w/w, and more preferably higher than or equal to 14 ± 2 % dry matter w/w.
- a water holding capacity (WHC) of at least 3 or 4 g/g, preferably ranging from 3.4 g/g to 7.0 g/g, in particular from 4 g/g to 5 g/g of concentrate;
- a minimum gelling concentration of 12 % (w/w) protein content or less, preferably of 10% or less and even more preferably of 7% or less protein content; and
- a total sugar content of 1.0 % (w/w) / DM or less, preferably of 0.4 % (w/w) / DM, or less, and even preferably of 0.3 % (w/w) / DM, or less.

Preferably, the soy seed protein concentrate, advantageously obtained or obtainable by the process of the present invention, comprises a fibre content ranging from 5% to 25% DM w/w, preferably from 12% to 18% DM w/w, in particular from 13% to 16% DM w/w. A preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1% to 10% DM w/w;
- a water holding capacity (WHC) of at least 3 or 4 g/g, preferably ranging from 3.4 g/g to 7.0 g/g, in particular from 4 g/g to 5 g/g of concentrate;
- a minimum gelling concentration of 12 % (w/w) protein content or less, preferably of 10% or less and even more preferably of 7% or less protein content;
- content of total fibres higher than, or equal to, 8% DM w/w, preferably higher than, or equal, to 10% DM w/w, and more preferably higher than or equal to 14 ± 2 % dry matter w/w.

It is further preferred that the protein concentrate of the invention, advantageously obtained or obtainable by the process of the present invention, comprises a maximum phytic acid, or phytate, content of 8% DM (w/w), preferably of 4% DM (w/w/) and in particular of 3 % DM (w/w), the method for measuring being described in the Examples below.

Preferably, the soy seed protein concentrate, advantageously obtained or obtainable by the process of the present invention, has a good emulsifying capacity.

Preferably, the soy seed protein concentrate, advantageously obtained or obtainable by the process of the present invention, has a light colour such as white, whitish and/or light beige. The scale uses the integrated colour space CieLab 1976 (L*, a*, b*). The colour coordinate L* is preferably at least of 80, preferably above 90, in particular above 92. The colour coordinate a* may range from -5 to 5, preferably from -2 to 2. The colour coordinate b* may range from -2 to 15, preferably from 0 to 13. The method for measuring the colour lightness is described in the Examples below.

A preferred concentrate of the invention comprises:
- a protein content of at least 70% dry matter w/w, preferably at least 75% dry matter w/w (DM), preferably at least 78% dry matter w/w and especially at least 80%, and which may have less than 85% dry matter w/w (N x 6.25);
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1% to 10% DM w/w;
- content of total fibres higher than, or equal to, 8% DM w/w, preferably higher than, or equal, to 10% DM w/w, and more preferably higher than or equal to 14 ± 2 % dry matter w/w.
- a water holding capacity (WHC) of at least 3 or 4 g/g, preferably ranging from 3.4 g/g to 7.0 g/g, in particular from 4 g/g to 5 g/g of concentrate;
- a minimum gelling concentration of 12 % (w/w) protein content or less, preferably of 10% or less and even more preferably of 7% or less protein content;
- a total sugar content of 1.5 % (w/w) / DM or less, preferably of 1.0 % (w/w) / DM and even preferably of 0.2 % (w/w) / DM or less;
   ; and
- a light colour as described above.

Preferably, the soy seed protein concentrate, advantageously obtained or obtainable by the process of the present invention, has a protein solubility of more than 10 % w/w and less than 45%, in an aqueous solution at a pH ranging from 4 to 8. Preferably the solubility is less than 35 %, in particular less than 30 %, in an aqueous solution at a pH ranging from 4 to 6 and/or a pH of 4 ± 0.5 or around 6 ± 0.5; the solubility being measured by the method described in the Examples (see infra).

Preferably, the soy protein concentrate, advantageously obtained or obtainable by the process of the present invention, is a powder made of particles. This powder may have a D50 (µm) average particle size ranging from 25µm and 200µm, preferably between 25µm and 50µm, more preferably between 30µm and 40µm; and/or
a D90 (µm) average particle size ranging from 100µm and 500µm, preferably between 140 µm and 400µm, more preferably between 170 µm and 390 µm.

According to a particularly preferred aspect of the invention, the soybean, the pressed soybean (*i.e.,* soy press cake), and more generally the product obtained according to the process of the invention, is not treated with a non-polar solvent and in particular is not treated with hexane or n-hexane. Thus, the product obtained from the method of the invention is not contacted with such a solvent at any time during the process and the process does therefore not include the use of such a compound or compounds. The maximum amount of hexane authorised in soy proteins is 30 mg/Kg. Hence a protein concentrate of the invention may have less than 10mg/kg, advantageously less than 5mg/Kg and more preferably virtually no residual and/or trace amount of hexane (e.g. less than 1mg/Kg).

It is further preferred that the concentrate of the invention contains no additive, and/or be constituted of at least 95% (w/w), preferably of at least 98 % (w/w), even more preferably at least 99% (w/w) of organic matter originating from the soybean seed.

The proteins to be concentrated by the process of the invention comprise globulins and are preferably essentially (at least 90% (w/w)) of the globulin type. In particular they are from the 7 S and 11 S and/or 15 S fractions which constitute about 70% of the total protein in soybeans. The principal component of the 7 S fraction is beta-conglycinin, a sugar containing globulin with a molecular weight in the order of 150000. The fraction also comprises enzymes (beta-amylase and lipoxygenase) and hemagglutinins. The 11 S fraction consists essentially of glycinin, the principal protein of soybeans.

The 2 S of fraction of soybean protein consists of low molecular weight polypeptides (in the range of 8000 to 20000 daltons) and comprises the soybean trypsin inhibitors and albumins. The trypsin inhibitors are undesirable anti-nutrients. These 2 S proteins are thus preferably removed by the process of the invention and the concentrate of the invention preferably contains low amounts of albumin.

### USES and METHODS

The soy protein concentrate according to the invention can be used in the food industry or feed industry, in particular for preparing a food product. In particular these food products can be related to bakery and cereals (ex. bread, biscuits, snack, cereals, and nutritional bars).

As the soy protein concentrate above described has a high protein content and an elevated fibre content and also a high water holding (absorption) capacity and / or gelling properties it is particularly well suited to be used as an ingredient (*e*.*g*., a structuring agent) for preparing meat based products (such as nuggets, knacks, ham or burgers) as well as meat (partial or total substitutes) in particular as meat alternatives or meat analogues (100% vegetarian products) (cf. Kyriakopoulou *et al.,* 2019).

The invention also provides a process of making a foodstuff, such as frozen desserts, coffee whiteners, soups sauces, pizza toppings and bakery products, a beverage or a food supplement, by adding and/or mixing any one of a soy protein concentrate above described, or a mixture thereof, to other ingredients.

Another object of the invention is the use of an soy protein concentrate above described, or a mixture thereof, as an animal feed (e.g. aquafeed) or a food or a dietary supplement or additive for animal and/or human consumption. In particular, the concentrate of the invention may comprise a high methionine content, which is an essential amino acid for fish, or a high lysine content.

Another object of the invention is the use of any one of a soy protein concentrate above described, or a mixture thereof, for making a biofuel or bio-material or bio-composite, *e*.*g*. building materials.

Foregoing and other objects and advantages of the invention will become more apparent from the following detailed description, which refers to non-limiting examples illustrating the uses according to the invention.
Figure 1 is a schematic representation of a process according to the invention.

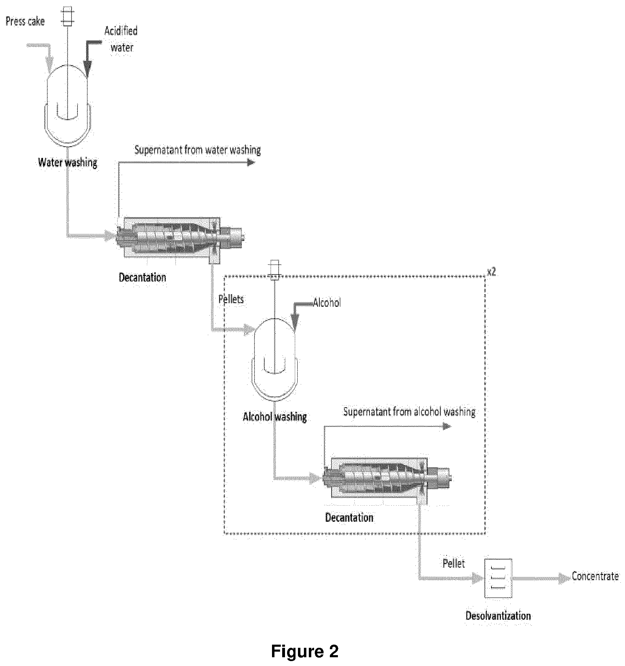

Figure 2 is a schematic representation of the process steps of Example 1.
Figure 3 : are pictures of solutions of a protein concentrate of the invention before heat treatment (above) and after heat treatment at different concentrations and turned upside-down (below)
Figure 4 : Shows the evolution of G' and G" during heating and cooling in a rheometer

### EXAMPLES

The following examples were carried to exemplify the process of the invention.

The analytical methods used in these experiments were the following:
Dry matter: Total dry matter concentration in % (w/w) was determined using the French Standard NF EN ISO 6498 (2012).

Protein content: The protein content was determined by the Dumas/Kjeldahl method according to the French Standard (Norme AFNOR) NF EN ISO 16634-1. A conversion factor of 6.25 (N x 6.25) was used to determine the amount of protein (% (w/w)).

Ash content: The total ash content was determined according to the method described in the French Standard NF V18-101 (1977) entitled "Dosage des cendres brutes"/ "Measurement of raw hashes". The samples were preliminary grinded using a Retsch Grinder with a 1mm grid.

The following changes were made to NF V18-101 (1977):
- The NF V18-101 Standard recommends to first carbonising the test sample using a flame treatment or a progressive heating on a hot plate before it putting it in a muffle furnace at 550°C for a period of three hours. The method used to measure the ash content in the example avoids this preliminary calcination step, by increasing the heating time in the muffle furnace at 550°C from three (3) to thirteen (13) hours.
- In the event that the sample is insufficiently calcined, the Standard NF V18-101 requires the ashes to be moistened with pure water, dried in a drying oven (about 1 hour), then heated for 1 hour in the muffle furnace. In the present case, it is recommended to increase the 1 hour heating of the dried sample in the muffle oven from 1 to 13 hours at 550°C. The resulting ash content is provided as a (w/w) percentage of the sample original weight.

Fat content: The fat content (%(w/w)) was determined according to the Standard NF ISO 6492 - B (2011) entitled "Aliments des animaux - Determination de la teneur en matière grasse/ Animal feeding stuffs - Determination of fat content" which measure the fat content after carrying out a hydrolysis with 3N aqueous chlorohydric acid. The samples were preliminary grinded using a RETSCH Grinder ZM 20 to achieve an average size of 1mm/using glass bead of 1mm.

The following changes were made to NF ISO 6492 - B (2011):
The mass of the sample being analysed was reduced to 0.8g.

NF ISO 6492 - B (2011) recommends the use of a Soxhlet extractor. Instead an automated system such as the one sold under SoxtecTM by FOSS (Denmark) was used.

Sugar content: The content of sugars (% (w/w)) was determined using the Luff Schoorl method as described in UE Regulation 152/2009.

Total fibres: The content of total fibres % (w/w) were determined using the AOAC 985.29 standard.

Phytic acid: see Analytical Biochemistry Vol. 77:536-539 (1977): The sample is extracted overnight with Na2SO4 solution. Phytic acid (phytate) is precipitated with FeCL3. The precipitate is then burned and the phosphorus content is determined on the precipitate by spectrophotometry. The phosphorus content is expressed in phytic acid equivalent.

Protein solubility: The protein solubility was tested on protein suspensions at 2% (w/w) dry matter content at pH 7 to 10. The protein solubility was estimated by the Kjeldahl method on the supernatant after centrifugation (15000 g, 10 min). The calculation of percentage of proteins solubility = Proteins in the supernatant % x 100 /proteins initially put in the solution.

Water holding capacity: The water holding capacity was measured by adding samples in water at a concentration of 20 mg/ml of dry matter. Solutions were blended 1 hour under stirring. After centrifugation at 15000 g during 10 min, the water content of the pellet was measured and compared with the initial weight of materials. Results are expressed as the numbers of times that sample retain its weight in water.

Minimum gelling concentration: Minimum gelling concentration was measured by preparing solutions of protein concentrate in water starting from 2% (w/w) in test tubes (PR-18009) . The protein content or the solid content is increased by 2% for each tubes, usually 5 to 10 tubes are sufficient. After solubilization, solutions were heated 1h in a water-bath at 85°C and then cooled 2h at 4°C. A solution was considered to have formed a gel if it behaved like a liquid before heating (i.e. free-flowing) and did not flow when test-tube was put upside-down after heating.
L*a*b* colour:
Colour analysis of powder was evaluated with a colorimeter. Results are expressed by 3 parameters L*, a* and b*:
L * (lightness), which ranges from 0 (black) to 100 (white)
a * which ranges from -300 (green) axis to 299 (red).
b * which ranges from -300 (blue) axis to 299 (yellow).

### Thermal stability by DSC (Differential Scanning Colorimetry):

DSC analysis consists in the measurement of the energy required to raise the temperature of a sample. An aqueous solution of proteins was used at a concentration of 10% w/v after 1 hour solubilisation at 30°C in a Rheax. DSC analysis was carried out in two steps: heating from 20 to 120°C with a gradient of 0.5°C/min and subsequent cooling step from 120 to 20°C with a gradient of 1°C/min. The parameters measured were denaturation temperature and specific heat.

### Gelling properties:

Gelling capacity was measured on a DHR-2 rheometer (TA) with a 40 mm plate / plate geometry. A 8 % protein solution at pH 7 was used. A temperature ramp was applied to the sample: heating from 25 to 90°C with a gradient of 2°C/min, stabilization without oscillation at 90°C for 10 minutes, cooling from 90 to 25°C with a gradient of 2.5°C/min. A strain of 0.1% was applied during the test. G' (storage modulus) and G" (loss modulus) were measured.

### Example I: Production of a soy protein concentrate according to the invention

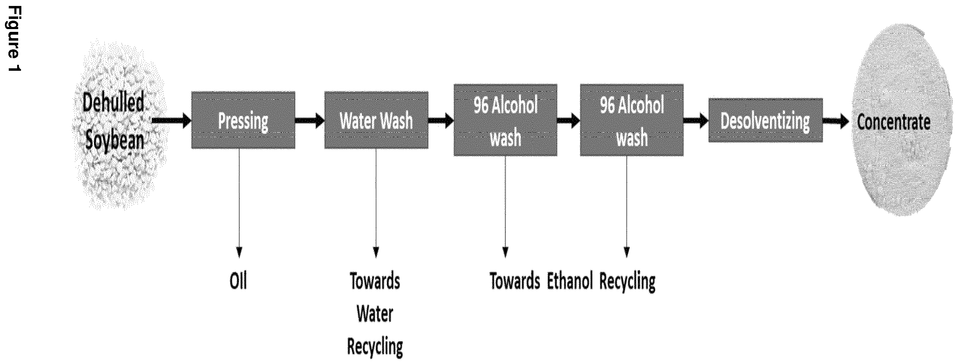

Process steps to obtain a concentrate according to this embodiment of the invention are represented in Figure 1.

### 1. Production of the soy press cake

The starting material was a soy kernel (fully dehulled) press cake.

The press cake from soy kernels was produced with a MBU20 screw press (sold by the French Company OLEXA). The temperature within the press was ranging from 66.1 to 72.4°C. 38,4 kg of press cake having an oil content of 9.83 wt. % / dry matter (DM) were produced. No fat extraction using hexane took place. The composition of the press cake is shown in Table 1 below.

**Table 1: Composition of the press cake**

| **Components in weight %*** | **Press cake** |
|---|---|
| Moisture | 11.3 |
| Fat | 7.57 |
| Protein (% as is) | 51.7 |
| Protein (% dry matter) | 58.3 |
| Protein (% defatted dry matter) | 62.3 |
| Ash | 5.5 |
| Total sugars (% as is) | 5.6 |
| Raffinose | 0.7 |
| Stachyose | 3.7 |
| Verbascose | <0.2 |
| Phytic acid | 2.15 |
| Phytic acid / Nx6,25 | 4.15 |
| Total fibres | 9.7 |

| | |
|---|---|
| * over total weight except specified otherwise Protein = Nx6.25 | |

### 2. Washing steps and production of a concentrate according to the invention

The washing and concentration steps are represented in more details on Figure 1.

### 2.1 Water washing step

Four (4) kilograms of the milled (through a 2mm screen) soy press cake was added to a stirred jacketed tank contained water acidified beforehand to pH 2 using phosphoric acid and preheated at 60 °C. The press cake/water weight ratio used was 1/8. The pH of the mixture was then adjusted between 4.5 to 4.8 using 1 M phosphoric acid, and the temperature maintained between 55-60 °C. At this pH, the mixture was stirred for 45 minutes and then separated by centrifugation at 4000G using a small scale decanter (MD80, Lemitec). During decantation, the decanter parameters were adjusted as seen in Table 2 below to obtain a liquid fraction with 0.2 wt.% of solids when the input slurry contains 25 wt.% of solids. The feed rate of the decanter was set at 67L/h. The differential speed between the bowl and the screw was adjusted at 90 RPM.

**Table 2**

| Acid wash decantation | |
|---|---|
| Feed | 67 L/h |
| g-force | 4000 |
| Diaphragm | 12 mm |
| Differential speed | 90 RPM |
| Feed solid content | 25% |
| Liquid phase solid content | 0.2% |

After the decantation, 28 Kg of liquid phase and 8.5 Kg of solid phase were obtained. The solid fraction was used for the next step.

### 2.2 First alcohol washing step

8.1 Kg of the solid fraction recovered from the previous decantation (8.1 Kg) was mixed with ethanol 96% preheated to 60 °C in the same tank. The weight ratio solids/96% ethanol used was 1/3.5, i.e. 26.9 Kg of ethanol 96% was used. The mixture was stirred for 30 minutes at constant temperature (57-59 °C) during 30 minutes and separated by centrifugation at 4000 G with the MD80 decanter. During decantation, the parameters were adjusted as seen in Table 3 below, to obtain a liquid fraction with 0.2 wt.%. The feed rate of the decanter was set at 67 L/h. The diameter of the diaphragm (liquid separator) was 12 mm and the differential speed between the bowl and the screw was adjusted at 110 RPM.

**Table 3**

| Acid wash decantation | |
|---|---|
| Feed | 67 L/h |
| g-force | 4000 |
| Diaphragm | 12 mm |
| Differential speed | 110 RPM |
| Liquid phase solid content | 0.2% |

At the end of the decantation step, 28.8 Kg of liquid phase and 4.8 Kg of solid phase were obtained. The solid fraction was used for the next ethanol washing step.

### 2.3 Second alcohol washing step

The solid fraction recovered from the previous decantation (4.8 Kg) was mixed with ethanol 96% preheated to 60 °C in the same tank. The weight ratio solids/96% ethanol used was 1/3.5, i.e. 16.7 Kg of ethanol 96%. The mixture was stirred for 30 minutes at constant temperature (58-59 °C) during 30 minutes and separated by centrifugation at 4000 G with the MD80 decanter. During decantation, the decanter parameters was adjusted as seen in Table 4 to obtain a liquid fraction with 0.2 wt.%. The feed rate of the decanter was set at 67 L/h. The diameter of the diaphragm (liquid separator) was 12 mm. The differential speed between the bowl and the screw was adjusted between 140-200 RPM.

**Table 4**

| Acid wash decantation | |
|---|---|
| Feed | 67 L/h |
| g-force | 4000 |
| Diaphragm | 12 mm |
| Differential speed | 140-200 RPM |
| Liquid phase solid content | 0.2% |

At the end of the decantation step, 16.3 Kg of liquid phase and 4.2 Kg of solid phase were obtained. The solid fraction was used for the drying step.

### 2. Drying step

The total amount of solid fraction obtained in the previous step was dried by using a ventilated oven dryer (Cellule 45, Capic). The drying temperature was kept at 40°C during 24 hours.

After drying, around 1.9 Kg of soy protein concentrate was obtained. The mean dry matter content of the total concentrate was 95.2 wt. %.

### 3. Physical properties and chemical composition of the concentrate

### 3.1 Composition

The composition is shown in Table 5 below. The protein purity of the concentrate is 81.2 wt. % / DM against 58.3 wt. % / DM in the press cake. This enrichment is due to the significant elimination of fat and other compounds achieved by the process of the invention.

**Table 5**

| | |
|---|---|
| Dry matter (DM) | 95.19 wt.% |
| Protein | 77.3 wt. % |
| Protein / DM | 81.2 wt.% |
| Ash /DM | 4.9 wt.% |
| Fat /DM | 1.8 wt.% |
| Total fibres / DM | 14.6 wt.% |
| Total sugars | <0.2 wt.% |
| Phytic acid / DM | 2.7 wt.% |
| Phytic acid / Nx6,25 | 3.5 wt.% |
| Raffinose | <0.2 wt. % |
| Stachyose | 0.2 wt. % |
| Verbascose | <0.2 wt. % |

The combined high concentrations of soy proteins and fibres provides for a concentrate having improved texturization abilities. This concentrate is particularly suitable for the manufacture of meat products or meat analogues.

### 3.2 Colour of the powder and organoleptic properties

The colour of the powder was measured using a chromameter Konica Minolta CR400 CR410 (using a pulsed Xenon arc light source - 6 measurement photocells - diffused illumination and 0° reading). The scale used was the integrated colour space CieLab (L*, a*, b*). The colour of the powder is a light beige.

Standardised colour analysis of the soy protein concentrate powder:

| | |
|---|---|
| L* | 92,4 |
| a* | 0,91 |
| b* | 11,61 |

The organoleptic properties were evaluated at 9% of soy concentrate in water: no beany taste was observed. A slight green vegetable taste was observed, with a slight acidity (indeed, the pH of the ingredient was acid: 4,56 at 2% in water).

### 3.3 Differential Scanning Calorimetry (DSC)

The Soy Protein Concentrate was analysed by DSC. With this equipment, samples are heated from 20°C to 120°C and the energy associated to the thermal modification of molecules is measured. If the proteins have been preserved during the process, a large peak is observed at the denaturation temperature of globular proteins. If the proteins have already been denatured during the process, no peak is observed with the DSC. A peak at 88.2°C was observed, which corresponds to the denaturation temperature of proteins. The heat associated to this peak is 0.3 J/g. This indicates that the proteins are still native or at most partially denaturated.

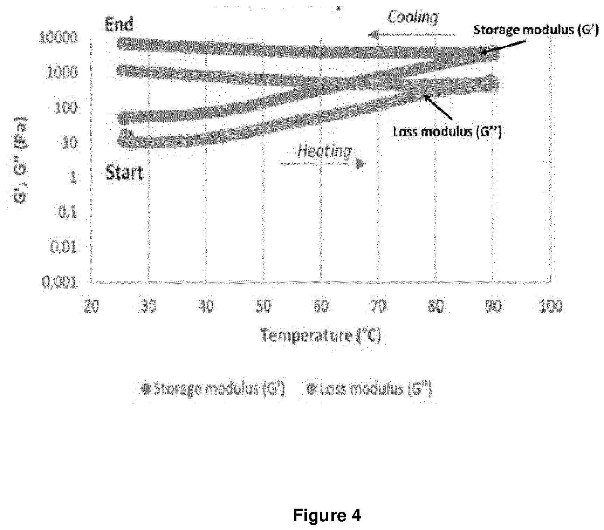

### See Figure 4 (to be deleted)

### 3.3 Functional properties

The functional properties were measured as mentioned above and are reported in the table 6 below.

**Table 6**

| | | |
|---|---|---|
| Protein Solubility | pH 4 | 25% |
| | pH 5 | 19% |
| | pH 6 | 26% |
| | pH 7 | 16% |
| | pH 8 | 19% |
| Water holding capacity (g of water /g of solids) | | 4.4 |
| Minimum gelling concentration | % proteins | 7 |
| Gelling properties | Final G', after thermal treatment (Pa) | 6911 |

The protein solubility ranges from 16% to 26% when the pH is ranging from pH 4 to pH 8.

The Water Holding Capacity is good: 1 g of concentrate (i.e. solids) can retain 4.4 g of water.

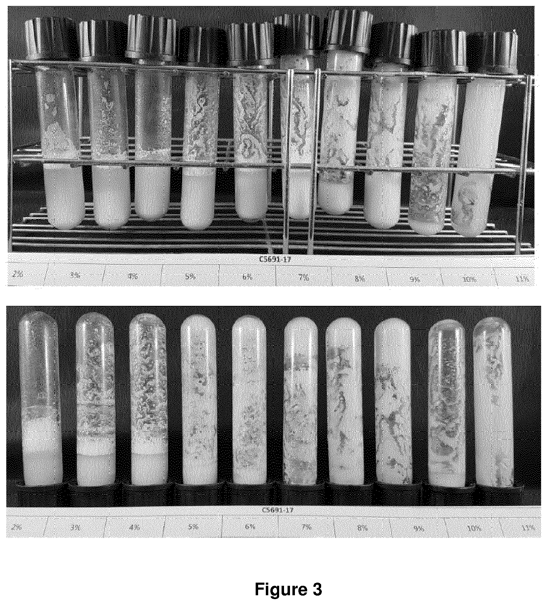

The minimum gelling concentration is 7 g of protein / 100 g solution. Before heating the solutions, pictures were taken. It should be noted that a very thick paste was obtained at 11% protein concentration as illustrated in Figure 3.

The rheological properties were tested by measuring the G' (elastic or storage modulus) and G" (viscous or loss modulus) values. These values are represented in Figure 4.

A progressive increase in G' (elastic or storage modulus) during the heating step, especially from 50°C was observed. This increase from this low temperature may be due to water absorption with time rather than protein gelation. The G' value after cooling of the samples (gel strength) was quite high : 6911 Pa.

A panel of 7 skilled persons tasted the soy concentrate and find it less bitter, less beany flavour and more fresh than commercial soy protein concentrates. Such flavours made it particularly suitable to its use in the food industry.

### REFERENCES

- US2012/253015A1 - SOY PROTEIN CONCENTRATE (2012)
- Laisney, J. (1984). L'huilerie moderne. Compagnie Française pour le Développement des Fibres Textiles (CFDT).
- Matthaus, B. (2012). Chapter 2: Oil Technology. In: S.K. Gupta (ed.), Technological Innovations in Major World Oil Crops, Volume 2: Perspectives, New York: NY Springer Science+Business Media, LLC, pp 23-92.
- Unger, E.H. (1990). Commercial Processing of Canola and Rapeseed: Crushing and Oil Extraction. In: Shahidi F. (eds) Canola and Rapeseed. Springer, Boston, MA, pp 235-249.
- Kyriakopoulou, K. (2019). Chapter 6: Plant-Based Meat Analogues. In: Sustainable Meat Production and Processing. Galanakis, Charis, Academic Press, ISBN 9780128148747, pp. 103-126.
- MA C-Y (2016), The University of Hong-Kong, Encyclopedia of Food Grains, 2nd ed. Oilseed and Legume processing; Soybean: Soy Concentrates and Isolates, p. 482-488.
- BERK, Zeki, Fao Agricultural Services Bulletin No. 97; Technology Of Production Of Edible Flours And Protein Products From Soybeans (1992). Food & Agriculture Organization of the United Nations (FAO) ISBN: 9789251031186.

## Claims

1. A process for producing a soybean seed protein concentrate, said process comprising the successive steps of:
a) providing a press cake from soybean seed, such as seed from the species *Glycine max* L., said soybean seed being at least partially dehulled before being pressed;
b) washing said press cake by mixing it with a first acidic aqueous solution to obtain an aqueous-washed soybean seed meal, wherein said first acidic solution comprises more than 90% w/w of water;
c) washing said aqueous-washed soybean seed meal by mixing it with a first alcohol solvent, to obtain a first alcohol-washed soybean seed meal, wherein said first alcohol solvent is a hydrous or a non-hydrous alcohol and has an alcohol concentration which is above 75 % w/w; and
d) separating said alcohol-washed soybean seed meal from said solvent to obtain said protein concentrate.

2. The process of Claim 1, wherein said soybean seed are kernels.

3. The process of anyone of Claim 1 or 2, wherein said press cake is obtained by cold pressing said soybean seed, preferably the temperature of the soybean seed during the pressing step shall be maintained as of 80°C or less.

4. The process of anyone of claims 1 to 3, wherein the pH of acidic wash of step b) is adjusted to range from 3.5 to 5.2, preferably 3.8 to 5.1, more preferably from 4.5 to 5.0 and most preferably from 4.7 to 4.9.

5. The process of anyone of claims 1 to 4, wherein said process comprises only one acidic washing step.

6. The process of anyone of claims 1 to 5, wherein said first alcohol solvent is a hydrous, a non-hydrous or an azeotrope mixture of alcohol, preferably an azeotrope.

7. The process of anyone of claims 1 to 6, wherein said first alcohol solvent is ethanol, preferably at a concentration of 96% w/w, and wherein hexane is preferably not used.

8. The process of anyone of claims 1 to 7, wherein step c) of said process is repeated no more than once.

9. The process of anyone of claims 1 to 8, wherein the proteins to be concentrated are not dissolved during said process.

10. The process of anyone of claims 1 to 9, wherein said separating step comprises a drying step.

11. A soybean seed protein concentrate, wherein said concentrate comprises:
- a protein content of at least 70% dry matter w/w, preferably at least 75% dry matter (DM) w/w, preferably at least 78% dry matter w/w and especially at least 80% (N x 6.25); and
- a content of total fibres higher than or equal to 8% dry matter w/w, preferably higher than or equal to 10% DM w/w, and more preferably higher than or equal to 14 ± 2 % dry matter w/w.

12. The soybean seed protein concentrate according to claim 11, wherein said concentrate further comprises:
- a fat content of less than 14% dry matter w/w, preferably less than 10% DM w/w, in particular less than 3 %, more particularly less than 2% dry matter w/w, wherein the fat (i.e. oil) content may be more than 1% DM (w/w) and preferably ranges from 1.5% to 10% DM w/w; and/or
- a water holding capacity (WHC) of at least 3 or 4 g/g, preferably ranging from 3.4 g/g to 7.0 g/g, in particular from 4 g/g to 5 g/g of concentrate.

13. The soybean seed protein concentrate according to claims 11 or 12, wherein said concentrate has a light white or beige colour and a L* coordinate, from a CieLab scale, of at least 85.

14. The soybean seed protein concentrate according to anyone of claims 11 to 13, wherein said concentrate is obtained, or obtainable, by the process of anyone of claims 1 to 10.

15. Use of the soybean seed protein concentrate of anyone of Claims 11 to 14, for preparing a food product or a feed for human or animal consumption.
